Europäisches Patentamt

European Patent Office

Office européen des brevets

(19)

(11) Veröffentlichungsnummer: **0 241 786 B1**

## (12) EUROPÄISCHE PATENTSCHRIFT

(45) Veröffentlichungstag der Patentschrift: 21.11.91

(51) Int. Cl.5: **F16L 33/04**

(21) Anmeldenummer: 87104548.0

(22) Anmeldetag: 27.03.87

(54) Schlauchschelle.

(30) Priorität: 14.04.86 DE 8610111 U

(43) Veröffentlichungstag der Anmeldung:
21.10.87 Patentblatt 87/43

(45) Bekanntmachung des Hinweises auf die
Patenterteilung:
21.11.91 Patentblatt 91/47

(84) Benannte Vertragsstaaten:
AT BE CH DE ES FR GB IT LI NL SE

(56) Entgegenhaltungen:
EP-A- 0 157 517       DE-U- 6 945 615
DE-U- 8 219 399       DE-U- 8 415 973
FR-A- 1 532 461       FR-A- 1 543 373
FR-A- 2 553 154       GB-A- 2 162 574
US-A- 1 432 572       US-A- 1 473 609
US-A- 1 947 715       US-A- 2 810 943

(73) Patentinhaber: **Märkisches Federnwerk GmbH
& Co. KG
Altenaer Strasse 246
W-5880 Lüdenscheid 8(DE)**

(72) Erfinder: **Schroer, Bernt, Dr.
Meerwiesenstrasse 44
W-4836 Herzebrock(DE)**
Erfinder: **Ebert, Ernst-Udo
Schützenstrasse 6
W-4772 Bad Sassendorf(DE)**

(74) Vertreter: **Meldau, Gustav, Dipl.-Ing. et al
Vennstrasse 9 Postfach 2452
W-4830 Gütersloh 1(DE)**

## Beschreibung

Die Erfindung betrifft eine Schlauchschelle zum Befestigen eines über ein Anschlußstück geschobenen Schlauches mit einen den Schlauch um mehr als 360° umgreifenden Spannring und mit einer mit den überlappenden Enden des Spannringes zusammenwirkenden, im wesentlichen parallel zu der Überlappung angeordnete Druckschraube, wobei die Enden des Spannringes nach außen gerichtete Umbiegungen aufweisen und wobei das eine Ende als Schrauböse ausgebildet und das andere Ende mit der ihr zugeordneten Seite der Druckschraube in Art eines Steckverschlusses lösbar verbindbar ist.

Zum Befestigen von Schläuchen auf einer Schlauchtülle, einem Anschlußstutzen o.dgl. dienen Schlauchschellen; derartige Schlauchschellen werden z.B. aus Draht- oder Bandmaterial hergestellt, wobei ein Spannelement die beiden Endes des Drahtes bzw. des Bandes miteinander so verbindet, daß die Schlauchschelle auf Spannung angezogen werden kann. So ist es bekannt, das Bandmaterial einer Schlauchschelle mit einer einer Zahnstange ähnelnden Verzahnung zu versehen und das Spannelement als Schnecke auszubilden. Eine derartige Schnecke wird von einer an dem einen Bandende vorgesehenen, entsprechenden Halterung aufgenommen; sie wirkt mit dem zahnstangenartig ausgebildeten zweiten Bandende so zusammen, daß die Schlauchschelle beim Drehen der Schnecke mit einem Werkzeug angezogen (oder gelöst) wird. Ein anderer Vorschlag (DE-GM 84 15 973.1) geht dahin, daß ein Drahtring, der das Anschlußstück nur teilweise umgreift, mit zwei Ösen versehen ist, durch die eine Schraube geführt ist, die in der einen Öse frei läuft und mit der anderen Öse in Art einer Mutter Zusammenwirkt. Der Zwischenraum zwischen den beiden nach auswärts gebogenen Ösen ist dabei durch ein Schiebestück überdeckt, das auf beiden Seiten entsprechende Lose aufweist. Diese Überdeckung ist notwendig, um ein Quetschen von Falten beim Anziehen der Schlauchschelle zu vermeiden. Dieser Nachteil haftet allen Schlauchschellen an, die den Schlauch nur zum Teil umgreifen, und bei denen das Spannen mittels eines als Zugglied ausgebildeten Spanngliedes erfolgt. Dieser Nachteil wird bei den Schlauchschellen vermieden, die den Schlauch bzw. den Ansschlußstutzen um mehr als 360° umgreifen. Eine derartige Schlauchschelle beschreibt die die auf die Priorität der deutschen Patentanmeldung 34 28 674.8 zurückgehende GB-A-2 162 574, die eine Schlauchschelle aus Draht betrifft, die zur Befestigung eines mit einer spiraligen Einlage versehenen Schlauches geeignet ist. Die mehr als 360° umfassende Umgreifung bedingt einen Überlappungsbereich, in dem die Drahtenden in einem der Steigung der Drahteinlage des Schlauches entsprechendem Abstand voneinander etwa parallel zueinander verlaufen. Zum Spannen wird eine auf Druck beanspruchte Schraube eingesetzt, wobei das eine Ende der Schlauchschelle ein U-förmiges, mit einem Schraubgewinde versehenes Schraubenlager aufweist, während das andere Ende der Schlauchschelle als nach auswärts umgebogener Haken ausgebildet ist, der in eine in der Druckschraube vorgesehene Bohrung eingeführt wird. So ergibt sich zwar ein Überlappungsbereich, der ein gleichmäßiges Anziehen der Schlauchschelle zum Befestigen eines Schlauches auf einem Stutzen erlauben würde, jedoch eine automatische Montage wegen des zusätzlich aufzusetzenden Schraubenlagers wirtschaftlich nicht ermöglicht. Darüber hinaus wird durch das Schraubenlager selbst die Gleichmäßigkeit des Anziehens in Frage gestellt, so daß eine Befestigung des Schlauches möglich ist, eine Abdichtung bei einer Belastung des Schlauches mit Druck jedoch in Frage steht, wobei wegen der Berücksichtigung der Spiraleinlage des Schlauches auf einen Doppel-Spannring nicht hingewiesen ist. Eine andere Ausbildung einer derartigen Schlauchschelle beschreibt die FR-A-1 543 373. Der in dieser Patentschrift beschriebene Spannring kann als Einfach-Spannring oder als Doppel-Spannring ausgebildet sein, wobei jeweils ein nach außen umgebogenes Ende eine Gewindeöse für das Spannelement in Form einer Schraube bildet. Während bei dem Einfach-Spannring die Schraube als Druckschraube ausgebildet ist und an ihrem freien Ende einen Zapfen zur Aufnahme einer Halteöse aufweist, ist bei dem Doppel-Spannring die Schraube eine Zugschraube, die gegen eine gewickelte Halteöse abgestützt ist und die in einer Gewindehülse geführt ist. Eine derartige Ausbildung des Steckverschlusses führt dazu, daß die gesamte Kraft als Zug über das zu einer Öse umgeformte Ende übertragen werden muß, eine Kraft die bei zum Abdichten notwendigen großen Spannkräften ein "Aufrollen" der Steckösse zur Folge hat. Darüber hinaus können derartige Spannringe in aller Regel nur geöffnet montiert werden und müssen nach dem Aufsetzen zunächst in eine Schraubposition gebracht werden. Das bedeutet, daß die Druckschraube mit Zapfen in die Schrauböse eingeschraubt und mit dem Zapfen in die Stecköse "eingefädelt" werden muß, ein Vorgang, der ein Aufsetzen der Schlauchschellen mit Hilfe von Automaten im allgemeinen nicht erlaubt.

Hier setzt die Erfindung ein, der die Aufgabe zugrunde liegt, die bekannte Schlauchschelle so weiterzubilden, daß sie aus möglichst wenig Einzelteilen besteht, die einfach - auch automatisch - zu auch für eine Befestigung von mit hohem Druck belasteten Schläuchen montiert, gespannt, entspannt und ggfs. auch geöffnet werden können und die einfach und wirtschaftlich herstellbar sind.

Diese Aufgabe wird nach der Erfindung durch das Merkmal des Anspruches 1 gelöst; vorteilhafte Weiterbildung und bevorzugte Ausführungsformen beschreiben die Unteransprüche.

Durch diese Ausbildung wird eine aus Federstahldraht bestehende Schlauchschelle geschaffen, deren Steckverbindung einfach und schnell zu öffnen ist, die geöffnet über den Schlauch gezogen und dann durch einfaches Einhängen des Hakens in die Schrauböse geschlossen wird, wobei die Federelastizität des Drahtes für die haltende Spannung sorgt. Wegen des Umgreifens um mehr als 360° ist dabei die Gefahr einer Faltenbildung im Bereich der Überlappung beim folgenden Spannen mit Hilfe der Druckschraube vermieden. Die Druckschraube selbst wird an das durch die Schrauböse gesteckte Ende des Hakens angesetzt und danach in die Schrauböse eingeschraubt und drückt sie beim Anziehen auseinander, wodurch die Umfangslänge der Schlauchschelle wegen der Überlappung verkürzt wird. Der Steckverschluß erlaubt ein einfaches Öffnen und Schließen der Schlauchschelle, wobei das Zusammenwirken des hakenförmigen Endes mit einer Bohrung in der Druckschraube eine vorteilhafte Überführung der Kräfte erlaubt und wodurch die auswärts gerichteten Abbiegungen wegen der Verwendung von federhartem Stahldraht die für die Kraftübertragung notwendige Steifheit erhalten.

Als Spannringe können nach dem Vorschlag Einfach-Spannringe und nach einem anderen Vorschlag Doppel-Spannringe aus Draht eingesetzt werden. Damit wird ein Spannring geschaffen, der den jeweiligen Bedingungen an der Spannstelle im Bezug auf den Schlauch und den den Schlauch aufnehmenden Schlauchstutzen anpassbar ist. Dabei sind die Spannringe im wesentlichen einstückig gefertigt, aus diesem Grund ist eine vorteilhafte Materialwahl durch Anwendung von federhartem Material, also von Federstahldraht, gegeben, die die für die Kraftübertragung vorteilhafte Steifheit der nach außen gerichteten Abbiegungen bewirkt.

Die mit der Druckschraube zusammenwirkende Schrauböse ist dabei an das eine nach außen abgebogene Ende des Spannringes angeformt durch Wickeln aus dem Draht des Spannringes, wobei die Schrauböse vorzugsweise mindestens 1 1/2 Gänge aufweist. Bei dieser Ausführungsform wird in einfacher Weise eine Schraubbarkeit des Einfach-Spannringes bzw. des Doppel-Spannringes erreicht, wobei die Schraube mit einem Gewinde versehen ist, das eine dem Durchmesser und der Form des Drahtes der Gewindeöse und damit des Spannringes entsprechende Steigung und Form der Gewindegänge der Schraube aufweist. Es versteht sich von selbst, daß jede Schraube, die sich nur in der Gewindeöse verschrauben läßt, den gleichen Zweck erfüllt. Dabei ist es besonders vorteilhaft, daß die Gewindeöse aus dem Federstahldraht eine mindestens 1 1/2-gängige Schraubenfeder bildet, wobei einer der Ausläufer des Wickels bei dem Doppel-Spannring den Ringteil des Spannringes bildet bzw. bilden. Die so gebildete Schraubenfeder wirkt als Schrauböse mit einer Schraube, deren Steigung größer ist als die Steigung der Schraubenfeder selbsthemmend zusammen, da durch die Gänge der Schraube die Schraubenfeder der Schrauböse "gestreckt" wird. Der Grad der Streckung und damit die Selbsthemmung wird durch den Unterschied zwischen Steigung der Schraubenfeder und Steigung der Schraube bestimmt; im allgemeinen ist davon auszugehen, daß Steigungsunterschiede von 5% bis 25% hinreichende Selbsthemmungen ergeben.

Bei dem Doppel-Spannring wird vorteilhaft der U-förmige Haarnadelbogen als Gewindeöse ausgebildet und beide Ausläufer des Wickels der Gewindeöse bilden die Drähte des (in diesem Falle doppelten) Spannringes. In beiden Fällen ist die Gewindeöse einstückig an den Draht des Spannringes angeformt, wobei beim Einzel-Spannring die Gewindeöse von einem der beiden Enden gebildet ist und beim Doppel-Spannring die Gewindeöse vorteilhaft aus dem U des Haarnadelbogens geformt ist.

Eine auf die Schraubenform abgestellte Ausbildung des Steckverschlusses wird dadurch erreicht, daß zu seiner Ausbildung das/die freie/-n Ende/-n des Einfach-Spannringes bzw. des Doppel-Spannringes mit seinem/seinen Haken in eine im freien Ende der Schraube vorgesehene Bohrung eingeführt ist. Dabei ist der Umbug des freien Endes des Einfach-Spannringes bzw. sind die Umbuge des Doppel-Spannringes hakenförmig abgebogen. Das der Steckverbindung abgewandte Ende der Schraube ist für den Angriff des Schraubwerkzeuges entsprechend ausgebildet, also z.B. mit Schlitz, Kreuzschlitz, Außensechskant, Innensechskant, Vierkant, Dreikant o. dgl. versehen.

Um die Füllung der Enden des Einfach-Spannringes im Bereich der Überlappung stets so zu halten, daß ein ordnungsgemäßer, in Spannringebene liegender Kraftfluß gewährleistet ist, wird beim Einfach-Spannring dies in einfacher Weise dadurch erreicht, daß entweder das eine oder das andere nach außen abgebogene Ende geringfügig seitlich verschränkt ist, so daß die Druckschraube in Spannringebene zu liegen kommt.

Bei den einstückig gefertigten Doppel-Spannringen wird die einwandfreie Ausbildung der Überlappung dadurch erreicht, daß die beiden einem der Enden des U zugewandten Drahtabschnitte zur Mitte zwischen den beiden Drähten hingerichtete Abkröpfungen aufweisen und bis zum Ende des U ohne wesentlichen Abstand nebeneinander liegen und die dem anderen Ende des U zugeordneten Drahtabschnitte mit Abstand so geführt sind, daß sie neben den nach innen abgekröpften Enden parallel zu diesen verlaufen. Durch diese Abkröpfung wird der Überlappungsbereich in einfacher Weise so überdeckt, daß ein unerwünschtes Quetschen des zu spannenden Schlauches vermieden wird, da die sich überlappenden Drahtabschnitte des Doppel-Spannringes nebeneinander liegen. Vorteilhaft ist es, wenn die durch die nach innen gerichteten Abkröpfungen ohne wesentlichen Abstand nebeneinander liegenden beiden Drähte der geschlossenen Seite des U zugeordnet sind. Sie werden dann von den beiden, den Haken zugewandten Drahtenden außen umgeben und - da die Haken in der Bohrung der Schraube zwangsgeführt und gehalten sind - an einem Ausweichen nach außen gehindert.

Das Wesen der Erfindung wird anhand der Figuren 1 bis 3 beispielhaft erläutert; dabei zeigen

Fig. 1 einen Einfach-Spannring mit Druckschraube etwa parallel zur Überlappung;

Fig. 2 eine Einzelheit jedes Einfach-Spannringes nach Fig. 1, wobei die Überlappung mit Schrauböse und Haken in Fig. 2a und die Druckschraube in Fig. 2b dargestellt sind;

Fig. 3 eine (geschnittene) Einzelheit der Drahtführung im Bereich der Überlappung bei einem Doppel-Spannringes.

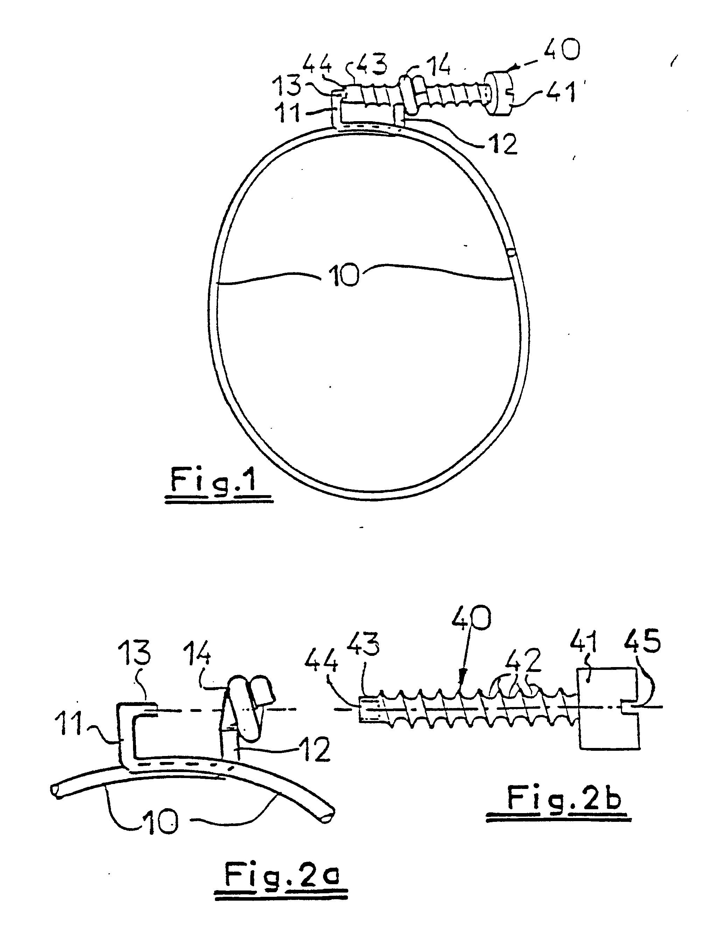

Die Figur 1 zeigt einen Einfach-Spannring 10 mit überlappenden Enden, die im wesentlichen radial nach außen abgebogene Teile 11 und 12 ausweisen. Der radial nach außen abgebogene Teil 11 ist an seinem äußeren Ende mit einem etwa in Umfangsrichtung wieder rückwärts weisenden Haken 13 versehen. An das andere, etwa radial nach außen abgewinkelte Ende 12 des Einfach-Spannringes 10 ist eine 1 1/2-fache Umschlingung als Schrauböse 14 angeformt, die die Schraube 40 aufnimmt. Das Gewinde der Schraube 40 ist dem Durchmesser des Drahtes des Einfach-Spannringes 10 angepaßt, wobei die Steigung geringfügig von der Steigung der Gewindeöse zu größeren Steigungen hin abweichen kann. Dadurch wird eine elastische Verformung der Gewindeöse und eine Hemmung der Schraube erreicht. Die Schraube besitzt einen Kopf 41 - hier mit Schlitz versehen -, der zum Ansetzen des Werkzeuges dient. An dem anderen freien Ende 43 ist eine Bohrung 44 vorgesehen, in die der Haken 13 eingreift. Einzelheiten dieses Zusammenwirkens zeigen die Figuren 2a und 2b: Hierbei ist die Schraube 40 aus der Schrauböse 14 entfernt, wobei die gemeinsame Achse durch eine strichpunktierte Linie angedeutet ist. Deutlich ist die Ausbildung des Gewindes 42 zu erkennen, dessen Gangprofil dem Querschnitt des Drahtes, aus dem die Schrauböse 14 geformt ist, angepaßt ist.

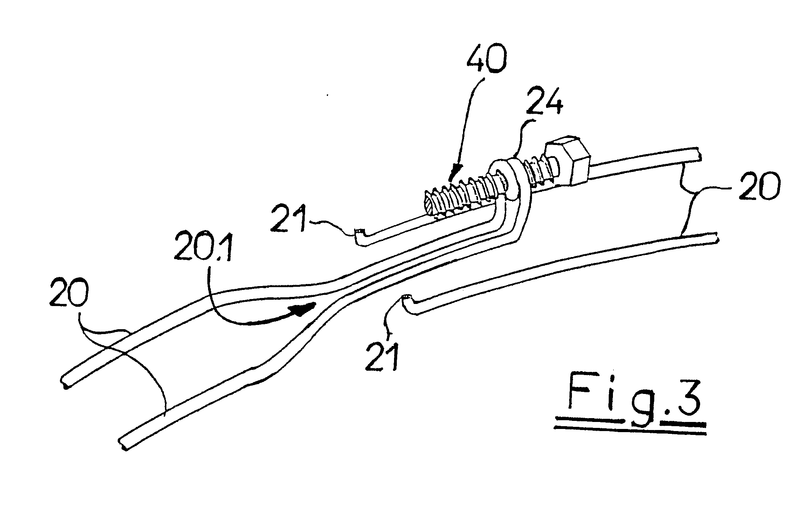

Die Figur 3 zeigt eine halbperspektivische Darstellung die Drahtführung im Überlappungsbereich eines Doppel-Spannringes 20, bei dem die dem mit der Schrauböse 24 versehenen Ende zugeordneten Drahtteile zur Mitte hin gerichteten Abkröpfungen 20.1 aufweisen und so im Bereich der Überlappung zwischen denen liegen, die dem anderen Ende zugeordnet sind. Die Druckschraube 40 ist geschnitten dargestellt, ihr nicht dargestelltes Ende ist entsprechenden Fig. 1 mit einer Bohrung versehen, in die entsprechenden Fig. 2a/2b die zu Haken umgeformten nach außen gerichteten (und abgebrochen dargestellten) Umbiegungen 21 in Art eines Steckverschlusses einführbar sind. Damit wird ein Doppel-Spannring erhalten, der über seine gesamte Länge unter Spannung stehend als abdichtende Schlauchbefestigung auch bei hoher Druckbelastung des zu befestigenden Schlauches einsetzbar ist. Diese Anordnung hat sich als vorteilhaft herausgestellt, da im Einbauzustand die Haken in die im freien Ende der Druckschraube 40 vorgesehene Bohrung eingeführt sind und so auf Abstand gehalten werden. Dadurch werden auch beide Umbiegungen zur Mittelebene des Doppel-Spannringes 20 verdreht, so daß ein Ausweichen der der Schrauböse 24 zugeordneten Drahtteile im Überlappungsbereich verhindert wird. Das Anziehen erfolgt mit Hilfe eines am Schraubenkopf - in der Darstellung mit einem Außensechskant versehen - angesetzten Werkzeugs.

## Patentansprüche

1.  Schlauchschelle zum Befestigen eines über ein Anschlußstück geschobenen Schlauches mit einem den Schlauch um mehr als 360° umgreifenden Spannring (10;20) und mit einer mit den überlappenden Enden des Spannringes (10;20) zusammenwirkenden, im wesentlichen parallel zu der Überlappung angeordneten Druckschraube (40), wobei die Enden des Spannringes (10;20) nach außen gerichtete Umbiegungen (11,12; 21,22) aufweisen und wobei das eine Ende (12;22) als Schrauböse ausgebildet und das andere Ende (11;21) mit der ihr zugeordneten Seite der Druckschraube (40) in Art eines Steckverschlusses lösbar verbindbar ist, **dadurch gekennzeichnet,** daß der Spannring ein aus einem Stück gestreckten Federstahldraht geformter Einfachspannring (10) ist, dessen eine an seinem einen Ende nach außen gerichtete Umbiegung (12) die Schrauböse (14) vorzugsweise mit 1 1/2 Gängen mit geringfügig kleinerem Abstand voneinander, als der Steigung des Gewindes (42) der Druckschraube (40) entspricht, bildet, und dessen andere an seinem anderen Ende nach außen gerichtete Umbiegung (11) mit einem tangential gerichteten Haken (13) versehen ist, wobei die hakenseitig nach außen weisende Umbiegung (11;12) geringfügig seitlich derart verschränkt ist, daß die Achse des den Steckverschluß bildenden Hakens (13) und die Mittelachse der Schgrauböse (14) zusammenfallen und im wesentlichen in Spannringebene liegen und daß die Druckschraube (40) an ihrem freien Ende (43) eine Bohrung (44) aufweist, in die der Haken (13) einführbar ist.

2. Schlauchschelle nach Anspruch 1, **dadurch gekennzeichnet,** daß die der Seite des Hakens (13) zugeordnete Umbiegung (11) geringfügig seitlich verschränkt ist.

3. Schlauchschelle zum Befestigen eines über einen Anschlußstück geschobenen Schlauch mit einen den Schlauch um mehr als 360° umgreifenden Spannring (10;20) und mit einer mit den überlappenden Enden des Spannringes (10;20) zusammenwirkenden, im wesentlichen parallel zu der Überlappung angeordneten Druckschraube (40), wobei die Enden des Spannringes (10;20) nach außen gerichtete Umbiegungen (11,12; 21,22) aufweisen und wobei das eine Ende (12:22) als Schrauböse ausgebildet und das andere Ende (11; 21) mit der ihr zugeordneten Seite der Druckschraube (40) in Art eines Steckverschlusses lösbar verbindbar ist, **dadurch gekennzeichnet,** daß der Spannring aus einem Stück haarnadelförmig gebogenem Federstahldraht geformter Doppelspannring (20) ist, dessen eine, dem Ende der Haarnadelbiegung zugeordnete, nach außen gerichtete Umbiegung (22) die Schrauböse (24) mit vorzugsweise 1 1/2 Gängen mit geringfügig kleinerem Abstand voneinander, als der Steigung des Gewindes (42) der Druckschraube (40) entspricht, bildet, und dessen andere, den freien Enden der Haarnadel zugeordneten, nach außen gerichteten Umbiegung (21) mit tangential gerichteten Haken (23) versehen sind, wobei die beiden einem der Enden des haarnadelförmigen U des Doppelspannringes (20) zugeordneten Drahtabschnitte zur Mitte zwischen beiden Drähten gerichtete Abkröpfungen (20.1) aufweisen, so daß die beiden dem anderen der Enden zugeordneten Drahtabschnitte im Bereich der Überlappung außen neben den nach innen abgekröpften Drahtabschnitten und parallel zu diesen verlaufen und daß die Druckschraube (40) an ihrem freien Ende (43) eine Bohrung (44) aufweist, in die die Haken (23) einführbar sind.

4. Schlauchschelle nach Anspruch 3, **dadurch gekennzeichnet,** daß die beiden einem der Enden des haarnadelförmigen U des Doppelspannringes (20) zugeordneten Drahtabschnitte zur Mitte zwischen beiden Drähten gerichtete Abkröpfungen (20.1) aufweisen, so daß die beiden dem anderen der Enden zugeordneten Drahtabschnitte im Bereich der Überlappung außen neben den nach innen abgekröpften Drahtabschnitten und parallel zu diesen verlaufen.

5. Schlauchschelle nach einem der Ansprüchen 1 bis 4, **dadurch gekennzeichnet,** daß die Druckschraube (40) als Kunststoff-Spritzgieß- oder Metall-Druckgußteil ausgebildet ist.

**Claims**

1. Hose clamp for fixing a hose fitted over a connection piece to an expansion ring (10;20) gripping around the hose by more than 360° and to a pressure screw (40) cooperating with the overlapping ends of the expansion ring (10;20) and arranged essentially parallel to the overlap, whereby the ends of the expansion ring (10;20) have outwardly pointing flanges (11,12;21;22) and whereby the one end (12;22) is designed as a screw shank and the other end (11; 21) is removably connectable to the side of the pressure screw (40) adjoining it in the manner of a plug-and-socket connection, **characterised in that** the expansion ring is a single expansion ring (10) formed from a piece of stretched spring steel wire, the one flange (12) of which, pointing outwards at one of its ends, forms the screw shank (14), preferably with 1 1/2 threads at a slightly smaller distance from one another than corresponds to the pitch of the thread (42) of the pressure screw (40), and the other flange (11) of which, pointing outwards at its other end, is provided with a tangentially pointing hook (13), whereby the flange (11;12) pointing outwards on the hook side is staggered slightly at the side in such a way that the axis of the hook (13) forming the plug-and-socket connection and the central axis of the screw shank (14) coincide and lie essentially in the plane of the expansion ring and that the pressure screw (40) has a bore (44) at its free end (43) into which the hook (13) can be inserted.

2. Hose clamp according to Claim 1, **characterised in that** the flange (11) adjoining the side of the hook (13) is slightly staggered at the side.

3. Hose clamp for fixing a hose fitted over a connecting piece to an expansion ring (10;20) gripping around the hose by more than 360° and to a pressure screw (40) cooperating with the overlapping ends of the expansion ring (10;20) and arranged essentially parallel to the overlap, whereby the ends of the expansion ring (10;20) have outwardly pointing flanges (11,12;21;22) and whereby the one end (12;22) is designed as a screw shank and the other end (11;21) is removably connectable to the side of the pressure screw (40) adjoining it in the manner of a plug-and-socket connection, **characterised in that** the expansion ring is a double expansion ring (20) formed from a piece of spring steel wire bent into the shape of a hairpin, the one outwardly pointing flange (22) of which, adjoining the end of the hairpin bend, forms the screw shank (24) preferably with 1 1/2 threads at a slightly smaller distance from one another than corresponds to the pitch of the thread (42) of the pressure screw (40), and the other outwardly pointing flange (21) of which, adjoining the free end of the hairpin, is provided with tangentially pointing hooks (23), whereby the two wire sections adjoining one of the ends of the hairpin-shaped U of the double expansion ring (20) have bends (20.1) pointing towards the centre between the two wires so that the two wire sections adjoining the other one of the ends in the area of the overlap run outwards alongside the inwardly bent wire sections and parallel to the latter and in that the pressure screw (40) has a bore (44) at its free end (43) into which the hooks (23) can be inserted.

4. Hose clamp according to Claim 3, **characterized in that** the two wire sections adjoining one of the ends of the hairpin-shaped U of the double expansion ring (20) have bends (20.1) pointing towards the centre between the two wires so that the two wire sections adjoining the other one of the ends in the area of the overlap run outwards alongside the inwardly bent wire sections and parallel to the latter.

5. Hose clamp according to one of Claims 1 to 4, **characterised in that** the pressure screw (40) is designed as a plastic die-casting part or metal pressure die-casting part.

**Revendications**

1. Collier de serrage destiné à la fixation d'un tube souple glissé sur un raccord, comportant un anneau de serrage (10; 20) entourant ledit tube souple sur plus de 360° et une vis de compression (40) coopérant avec les extrémités de l'anneau de serrage (10; 20) recouvrant le tube, disposée sensiblement parallèlement au recouvrement, les extrémités de l'anneau de serrage (10; 20) présentant des coudes (11, 12; 21, 22) diriges vers l'extérieur, la première extrémité (12; 22) étant réalisée sous forme d'oeillet de vis et l'autre extrémité (11; 21) pouvant être reliée de façon détachable à la manière d'une fermeture à broche, au côté de la vis de compression qui lui est associé, caractérisé en ce que l'anneau de serrage forme un anneau de serrage simple (10) formé à partir d'un élément de fil d'acier à ressort étiré dont un coude (12) situe à une première extrémité, orienté vers l'extérieur, constitue l'oeillet de vis (14), consistant de préférence en une spire et demie telle que la distance entre spires est un peu plus petite que ce qui correspond à la conicité du filet (42) de la vis de pression (40, et dont l'autre coude (11) situé à l'autre extrémité, orienté vers l'extérieur, comporte un crochet (13) oriente de façon tangentielle, le coude (11, 12) tourne vers l'extérieur du côté crochet étant disposé légèrement en oblique latéralement de telle manière que l'axe du crochet (13) constituant la fermeture à broche et l'axe médian de l'oeillet de vis (14) coïncident et sont sensiblement dans le plan de l'anneau de serrage, et en ce que la vis de compression (40) comporte à son extrémité libre (43) un alésage (44) dans lequel le crochet (13) peut être introduit.

2. Collier de serrage selon la revendication 1, caractérisé en ce que le coude (11) associé au côté du crochet (13) est légèrement décalé en oblique latéralement.

3. Collier de serrage destiné à la fixation d'un tube souple glisse sur un raccord, comportant un anneau de serrage (10; 20) entourant ledit tube souple sur plus de 360° et une vis de compression (40) coopérant avec les extrémités de l'anneau de serrage (10; 20) recouvrant le tube, disposée sensiblement parallèlement au recouvrement, les extrémités de l'anneau de serrage (10; 20) présentant des coudes (11, 12; 21, 22) dirigés vers l'extérieur, la première extrémité (12; 22) étant réalisé sous forme d'oeillet de vis et l'autre extrémité (11; 21) pouvant être reliée de façon détachable à la manière d'une fermeture à broche, au côté de la vis de compression qui lui est associé, caractérisé en ce que l'anneau de serrage est un anneau de serrage double (20) formé à partir d'un élément de fil d'acier à ressort coudé en épingle à cheveux, dont un coude (22) associé à l'extrémité coudée en épingle à cheveux, orienté vers l'extérieur, constitue l'oeillet de vis (24), consistant de préférence en une spire et demie telle que la distance entre spires est un peu plus petite que ce qui correspond à la conicité du filet (42) de la vis de pression (40), et dont l'autre coude (21) associé à l'extrémité libre de l'épingle à cheveux, orienté vers l'extérieur, est pourvu de crochets (23) orientés de façon tangentielle, les deux parties de fil associées a une des extrémités du U en épingle à cheveux de l'anneau de tension double (20) présentant des coudes (20.1) orientés vers le milieu entre les deux fils, de sorte que, dans la zone de recouvrement, les deux parties de fil associées à l'autre des extrémités sont situées à l'extérieur des parties de fils coudées orientées vers l'intérieur, voisines d'elles et parallèles à celles-ci, et en ce que la vis de compression (40) présente à son extrémité libre (43) un alésage (44) dans lequel les crochets (23) peuvent être introduits.

4. Collier de serrage selon la revendication 3, caractérisé en ce que les deux parties de fil associées à l'une des extrémités du U en épingle à cheveux du double d'anneau de serrage (20) présentent des coudes (20.1) orientés vers le milieu entre les deux fils de sorte que, dans la zone du recouvrement; les deux parties de fils associées à l'autre des extrémités sont situées à l'extérieur des parties de fils coudées orientées vers l'intérieur, voisines d'elles et parallèles a celles-ci.

5. Collier de serrage selon l'une des revendications 1 à 4, caractérisé en ce que la vis de compression (40) est réalisée sous forme de pièce coulée par injection en matière plastique ou sous forme de pièce métallique coulée sous pression.

Fig.1

Fig.2b

Fig.2a

40

24

21

20

20.1

20

21

Fig.3

EP 0 241 786 B1